# EUROPEAN PATENT APPLICATION

(11) **EP 4 155 531 A1**
(43) Date of publication of application: **29.03.2023**
(21) Application number: 21807573.7
(22) Date of filing: 13.05.2021
(51) Int. Cl.: F03D 3/06, F03D 3/02, F03D 15/00

(54) **WINDMILL**

(30) Priority: 21.05.2020 CN 202010435235
(71) Applicant: Anhui Kangdina Power Technology Co., Ltd., Huaibei, Anhui 235000 (CN)
(72) Inventor: ZHAO, Donglou, Huaibei, Anhui 235000 (CN); LU, Hai, Huaibei, Anhui 235000 (CN); YU, Feng, Huaibei, Anhui 235000 (CN); ZHAO, Donghao, Huaibei, Anhui 235000 (CN); JIA, Weixiang, Huaibei, Anhui 235000 (CN)
(74) Representative: Ström & Gulliksson AB
(86) International application number: PCT/CN2021/093597
(87) International publication number: WO 2021/233197

(57) **Abstract**

A windmill includes a rotating seat (10), a rotating shaft (30) vertically disposed on the rotating seat (10) as a power output shaft, a rotating frame (40) fixed circumferentially around the rotating shaft (30) and wind blades (50) articulated to the rotating frame (40). When the wind blades (50) are revolving (α) about a center axis of the rotating shaft, they are also spinning (β) about center axes of the articulation shafts (51). The revolution (α) and spinning (β) of the wind blades (50) occur in the same direction or in opposite directions. A steering mechanism drives the rotating seat (10) to rotate with attitude adjustments according to a wind direction so that the rotation follows the wind direction. The rotation with attitude adjustments satisfies such an adaptation relationship that, when a plane where the center axes of the articulation shafts (51) and the center axis of the rotating shaft (30) lie is perpendicular to the wind direction, a blade surface of one of the wind blades (50) on one side is perpendicular to the wind direction, and when the one of the wind blades (50) revolves 180° with the rotating shaft (30), it spins 90° so that its blade surface is parallel to the wind direction. On an upwind side of the windmill, there is one of the wind blades (50) with its blade surface being perpendicular to the wind direction. This can maximize utilization of wind power for driving rotation of the entire windmill, and the windmill can be driven to rotate even by gentle breezes.

## Description

### Field of the Invention

The present invention relates to the technical field of wind energy utilization and, in particular to, a windmill.

### Description of the Prior Art

The rapid development of the economy is accelerating energy consumption, deteriorating the severity of energy shortage. As a kind of renewable energy, wind energy is attracting more and more attention. At present, wind energy is utilized mainly by converting wind energy into mechanical energy through windmills and then converting the mechanical energy into electrical energy through generators. Windmills can also be directly used as power mechanisms for other devices.

Existing wind generators typically rely on windmills for causing their rotors to rotate to generate electricity. However, winds in natural environments tend to change constantly, both in direction and magnitude. Since windmills in wind generators are huge and equipped with narrow blades, in case of light winds or gentle breezes, they tend to be insufficiently powered and can barely drive rotation of generator rotors, imposing limitations on wind power generation and making sustained power generation and supply impossible. Moreover, generators in absence of winds that are adequately strong to support their operation have to be idle, leading to a waste of resources. When such downtimes last for long, rust may occur, and bring damage, to the equipment. Further, a windmill must maintain a constant direction of rotation. Otherwise, voltage instabilities may happen.

### Summary of the Invention

It is an object of the present invention to provide a windmill capable of maintaining a constant direction of rotation.

In order to achieve this object, the subject matter of the present invention lies in a windmill including a rotating seat, a rotating shaft vertically disposed on the rotating seat as a power output shaft, a rotating frame fixed circumferentially around the rotating shaft, and wind blades articulated to the rotating frame. A direction of center axes of articulation shafts of the wind blades is parallel to a direction of a center axis of the rotating shaft. At least two wind blades are evenly spaced in a circumferential direction of the rotating shaft. When the wind blades are revolving about the center axis of the rotating shaft, they are also spinning about the center axes of the articulation shafts. The revolution and spinning of the wind blades occur in the same direction or in opposite directions. The rotating seat is driven by a steering mechanism to make a rotation with attitude adjustments following a wind direction according to the wind direction. The rotation with attitude adjustments satisfies such an adaptation relationship that, when a plane where the center axes of the articulation shafts and the center axis of the rotating shaft lie is perpendicular to the wind direction, a blade surface of one of the wind blades on one side is perpendicular to the wind direction, and when the one of the wind blades revolves 180° with the rotating shaft it spins 90° so that its blade surface is parallel to the wind direction. Rotation support structures for axially supporting the rotating shaft and the wind blades coupled thereto are disposed between the rotating shaft and a rack.

In the above arrangement, on an upwind side of the windmill, there is one of the wind blades with its blade surface being perpendicular to the wind direction. This can maximize utilization of wind power for driving rotation of the entire windmill, and the windmill can be driven to rotate even by gentle breezes, resulting in increased utilization of wind energy. Moreover, according to the present invention, the rotating seat can follow the wind direction to rotate. In this way, the windmill of the present invention can maintain stable rotation at any wind direction. As a result, the windmill can be driven by wind power to rotate in a constant direction.

### Brief Description of the Drawings

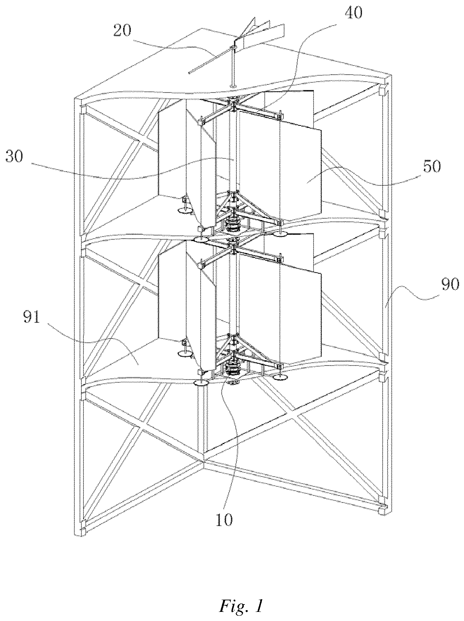

Fig. 1 is a schematic perspective view of the present invention;

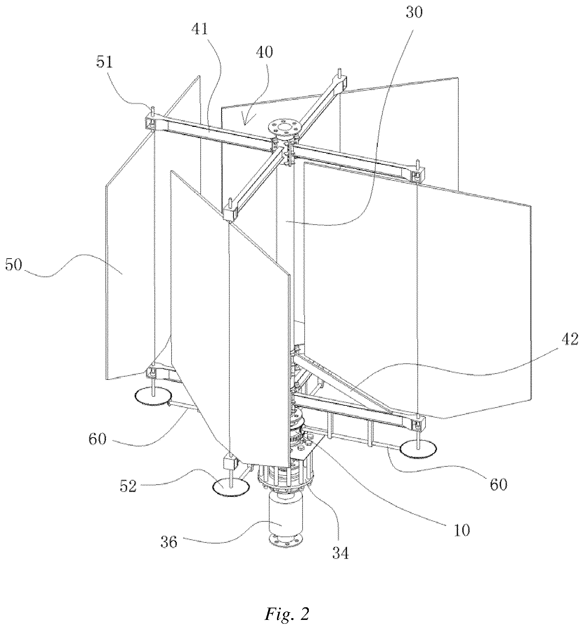

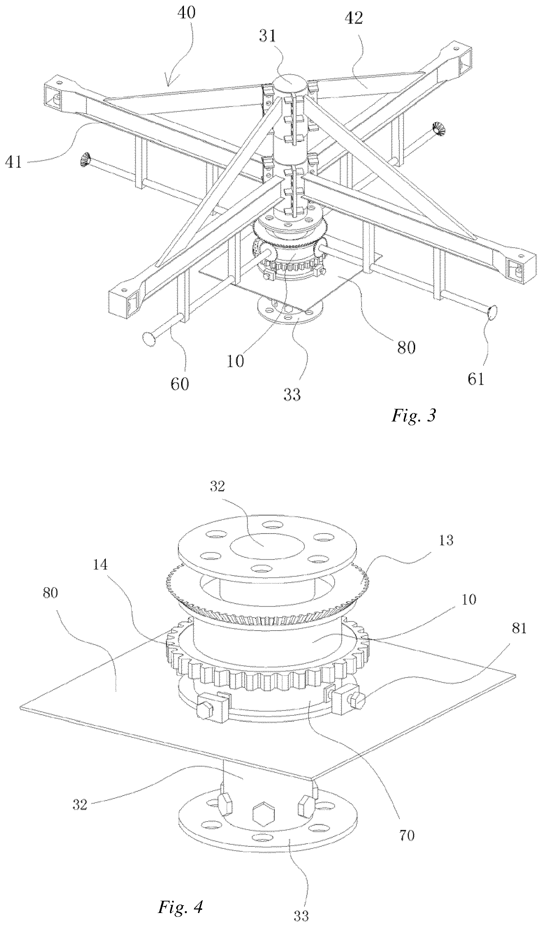

Fig. 2 and 3 are schematic diagrams showing the structure of the present invention;

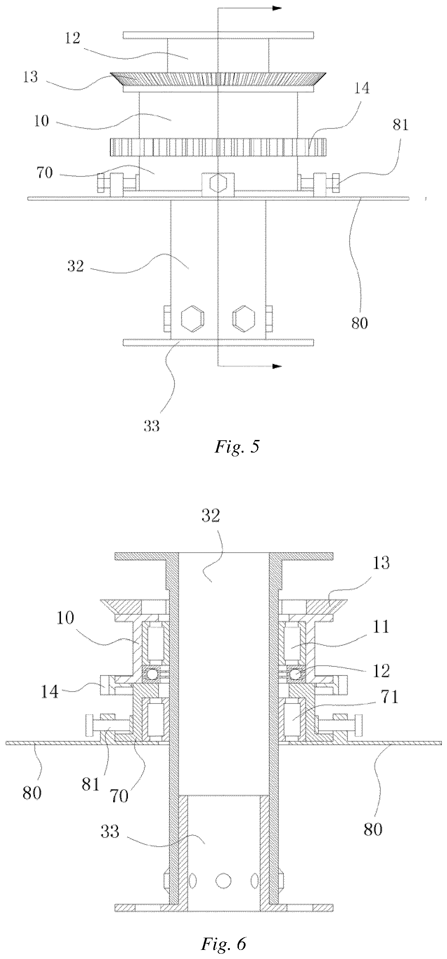

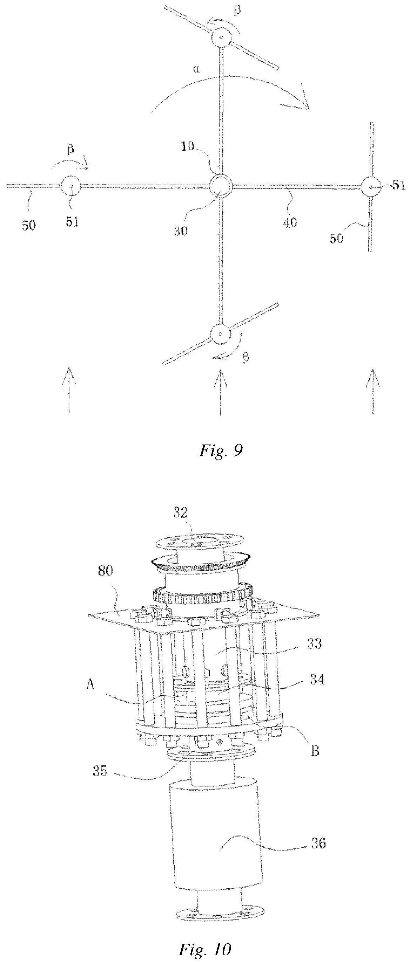

Figs. 4, 5 and 10 are schematic diagrams illustrating the structure of a windmill base;
Fig. 6 is a cross-sectional view taken along A-A in Fig. 5;

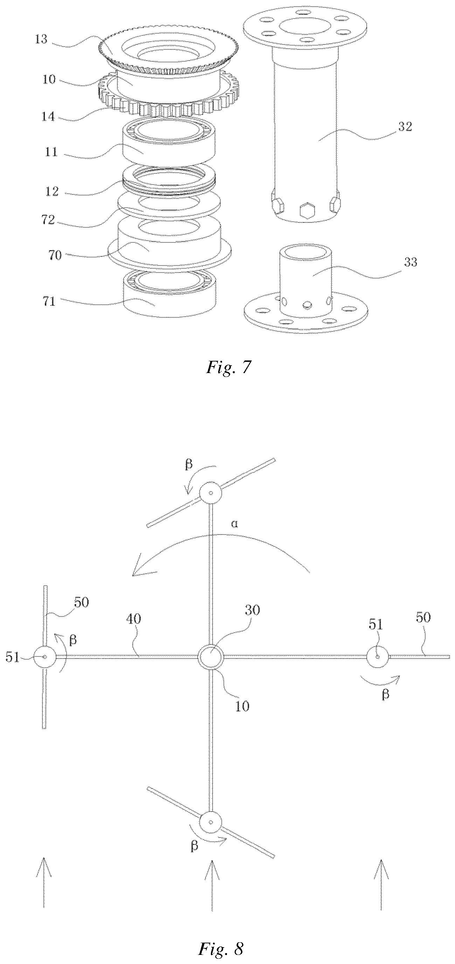

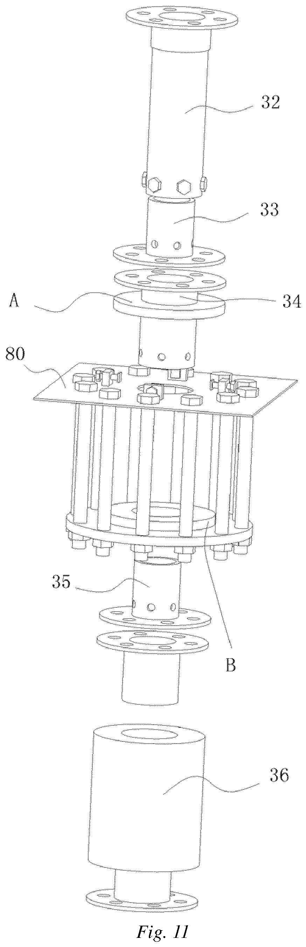

Figs. 7 and 11 are schematic exploded views of the windmill base; and
Figs. 8 and 9 explain how the present invention operates.

### Detailed Description of the Preferred Embodiments

A device for adjusting an angle of follow-up movement of wind blades in a windmill includes a rotating seat 10, a rotating shaft 30 vertically disposed on the rotating seat 10 as a power output shaft, a rotating frame 40 fixed circumferentially around the rotating shaft 30, and the wind blades 50 articulated to the rotating frame 40. Directions of center axes of articulation shafts 51 of the wind blades 50 are parallel to a direction of a center axis of the rotating shaft 30. At least two wind blades 50 are evenly spaced in a circumferential direction of the rotating shaft 30. While the wind blades 50 are revolving α about the center axis of the rotating shaft 30, they are also spinning β about the center axes of the articulation shafts 51. A direction of revolution α of the wind blades 50 is the same as or opposite to a direction of spinning β of the wind blades 50. A steering mechanism drives the rotating seat 10 to rotate with attitude adjustments according to a wind direction so that the rotation follows the wind direction. Such rotation with attitude adjustments satisfies such an adaptation relationship that, when a plane where the center axes of the articulation shafts 51 and the center axis of the rotating shaft 30 lie is perpendicular to the wind direction, a blade surface of a wind blades 50 on one side is perpendicular to the wind direction, and when one of the wind blades 50 revolves 180° with the rotating shaft 30, it spins 90° so that its blade surface is parallel to the wind direction. Between the rotating shaft 30 and a rack 90, rotation support structures 34 are disposed to axially support the rotating shaft 30 and the wind blades 50 coupled thereto.

In the above arrangement, when the plane where the center axes of the articulation shafts 51 and the center axis of the rotating shaft 30 lie is perpendicular to the wind direction, a wind blade 50 on one side with respect to the wind direction has its blade surface perpendicular to the wind direction to be exposed to the wind, while a wind blade 50 on the other side has its blade surface parallel to the wind direction to not be exposed to the wind. In this way, there is a tremendous difference between wind exposure areas of the two wind blades 50 on opposite sides with respect to the wind direction, which ensures the rotating shaft 30 keeps rotating in a constant direction with a maximum possible torque, maximizing utilization of the wind's power. The essence of the present invention is to enable each wind blade 50 to have different wind exposure areas at different position due to its own spinning β so that a resultant torque acting on the rotating shaft 30 on one side with respect to the wind direction is greater than a resultant torque on the other side, causing the wind blades 50 to revolve α about the center axis of the rotating shaft 30. The revolution α of each wind blade 50 is accompanied by its spinning β, and when each wind blade 50 revolves 180°, it spins 90°. That is, for each wind blade 50, a ratio of the angle of revolution α to the angle of spinning β is equal to 2:1. Since each wind blades 50 is a plate-like structure with symmetrical opposite sides, an angle between its blade surface and the wind direction after it spins β 180° is the same as an angle between its blade surface and the wind direction after it spins β 360°. This ensures that each wind blade 50 has a consistent wind exposure area at each position during its revolution α, thus allowing the windmill to operate in a continual and stable way. The essence of the rotating seat 10 adapting its attitude to the wind direction so that its follows the wind direction is that, with its position where it directly faces the wind direction being defined as a zero position, upon any change in the wind direction, the steering mechanism will drive the rotating seat 10 to rotate back into the zero position where it directly faces the wind direction. According to the present invention, the rotation support structure 34 is an axially supporting bearing or maglev mechanism. The windmill of the present invention has a large wind exposure area, which can maximize utilization of wind power for driving overall rotation of the whole windmill. The windmill can be rotated even by gentle breezes, resulting in additional increases in utilization of wind energy. Moreover, in the present invention, the rotating seat 10 can follow a wind direction to rotate. As a result, the windmill of the present invention can maintain stable rotation at any wind direction. In this way, the windmill can be driven by wind power to rotate in a constant direction.

The rotating seat 10 is fixedly provided thereon with a base gear 13 concentric with the rotating shaft 30. The base gear 13 meshes with the same number of intermediate gears 15 as that of wind blades 50. The intermediate gears 15 provided thereon with intermediate bevel gears 16 in concentricity therewith, and the articulation shafts 51 of the wind blades 50 are fixedly provided thereon with follower bevel gears 52 in concentricity therewith. Power transmission shafts 60 with a direction of center axes lying in a horizontal plane are each provided at opposite ends thereof with two bevel gears 61 in concentricity therewith, which mesh respectively with a respective one of the intermediate bevel gears 16 and a respective one of the follower bevel gears 52. In this arrangement, depending on the rotating seat 10, the power transmission shafts 60 and other linkage mechanisms may be arranged either above or under the wind blades 50. The mechanical structure in this arrangement enables the spinning β of the wind blades 50 to accompany the revolution α thereof in a simple and easy manner without proneness to errors. Additionally, in comparison to electric control, complicated wiring is dispensed with.

The wind blades 50 revolve α and spin β relative to a ground at speeds at a ratio of 2:1. Only when this is the case, can it be ensured that each wind blade 50 has a consistent angle with the wind direction at any position during its rotation.

The wind blades 50 revolve α and spin β relative to the ground in the same direction. The revolution α and spinning β of the wind blades 50 in the same direction refer to that, when viewed from the top of the windmill, the wind blades 50 revolve α and spin β both counterclockwise or clockwise. The spinning β is referred to relative to the ground. Since each wind blade 50 simultaneously revolves and spins, its angle of spinning β relative to the ground is equal to the angle of revolution α minus the angle of rotation relative to the respective articulation shaft 51, and its direction of rotation relative to the respective articulation shaft 51 is opposite to the direction of revolution α.

When the plane where the center axes of the articulation shafts 51 and the center axis of the rotating shaft 30 lie is parallel to the wind direction, the blade surfaces of the wind blades 50 form an angle of 45°with the wind direction. At this position of the wind blades 50, the blade surfaces of the wind blades 50 respectively at upwind and downwind positions with respect to the wind direction form an angle of 90°. Any wind blade 50 spins 90° from the upwind position to the downwind position. With the aid of a wind direction tracking system, the most upwind wind blade with respect to the wind direction is always kept at an angle of 45° relative to the wind direction by a driving means.

A braking means for restricting rotation of the rotating seat 10 is disposed in a power transmission path between the wind blades 50 and the steering mechanism. When there is no change in the wind direction, the braking means exerts a position limiting effect on the rotating seat 10 to prevent it from deflecting under the action of any external force.

A base 70 shaped like a cylindrical boss and disposed on a base plate 80 is further included. The rotating shaft 30 passes through the rotating seat 10, the base 70 and the base plate 80 and forms clearance fits with the three. A lower radial bearing 71 with a vertical center axis is disposed within the base 70 to radially support the rotating shaft 30. An axial bearing 12 with a vertical center axis is disposed at a top end of the base 70 to support the rotating seat 10. An upper radial bearing 11 with a vertical center axis is disposed within the rotating seat 10 to radially support the rotating seat 10. A shaft body of the rotating shaft 30 is disposed within the upper and lower radial bearings 11, 71 and forms small clearance fits with inner rings of the bearings. The upper radial bearing 11 is disposed on a top end face of the axial bearing 12. In this arrangement, the clearance fits are formed to avoid the rotating shaft 30 from coming, during its rotation, into contact and friction with the rotating seat 10, the base 70 and the base plate 80, which can cause wear and tear of the equipment and energy loss. Moreover, the base 70 is allowed to be adjusted in position within the clearance to prevent eccentricity and deflection of the rotating shaft 3. The small clearance fits ensure both that there is no axial force transferred between the upper and lower radial bearing 11, 71 and the shaft body of the rotating shaft 30 and that, even when the center axis of the rotating shaft 30 deflects during its rotation, the radial bearings are only subject to forces that they can withstand. In addition, in the event of a degree of deflection of the center axis of the rotating shaft 30, the upper and lower radial bearing 11, 71 will provide radial forces, which act in opposite directions at a certain distance on an intermediate coupling shaft 32 and thereby provide a bending moment therewith for support and position restoration. The base 70 and the lower radial bearing 71 therein are adapted to provide radial support to the rotating shaft 30, which allows the rotating shaft 30 to rotate freely on the base 70. Since the windmill is large, the rotating seat 10 is also large and heavy. The axial bearing 12 supports the rotating seat 10 while ensuring its rotatability relative to the base 70.

The rotating seat 10 is fixedly provided thereon with a bevel base gear 13 in concentricity with the rotating shaft 30, and the articulation shafts 51 of the wind blades 50 are fixedly provided thereon with follower bevel gears 52 in concentricity therewith. Power transmission shafts 60 with a direction of center axes lying in a horizontal plane are each provided at opposite ends thereof with two bevel gears 61 in concentricity therewith, which mesh respectively with the bevel base gear 13 and a respective one of the follower bevel gears 52. A transmission ratio of the bevel base gear 13 to the follower bevel gears 52 is 2:1. The bevel base gear 13 and the follower bevel gears 52 are oriented with their bases facing the same direction. Meshing sides of the two bevel gears 61 meshing with the bevel base gear 13 and the follower bevel gear 52 are located on a side of corresponding gears away from the rotating shaft 30. In this arrangement, depending on the rotating seat 10, the power transmission shafts 60 and other linkage mechanisms may be arranged either above or under the wind blades 50. The mechanical structure in this arrangement enables the spinning β of the wind blades 50 to accompany the revolution α thereof in a simple and easy manner without proneness to errors. Additionally, in comparison to electric control, complicated wiring is dispensed with. Further, compared to a chain power transmission, the shaft power transmission circumvents damage that may arise from chain falling and is easier to maintain and manage. The bases of the bevel base gear 13 and the follower bevel gears 52 are oriented so as to ensure the revolution α takes place in the same direction as the spinning β. According to the present invention, the bevel base gear 13 and the follower bevel gears 52 are oriented with their bases facing toward. In this way, the meshing sides of the bevel gears are located under the base, and therefore it is not easy for dust to accumulate thereon, resulting in extended service lives of them.

The steering mechanism includes a steering sprocket or gear 14 fixedly provided on the rotating seat 10 in concentricity therewith, and the driving means receives a position signal of the wind direction vane 20 and drives and adapts the sprocket or gear 14 so that it follows the wind direction vane 20 to rotate. In other words, the steering mechanism transmits power through a chain or the gear. Alternatively, a worm drive may be used, which provides both driving and braking functions and thus enables the rotating seat 10 to rotate in synchronization with the wind direction vane 20. Moreover, the driving means can also restrict rotation of the rotating seat 10 to prevent it from being driven to rotate by rotation of the rotating shaft 30. The rotating seat 10 is disposed under the rotating shaft 30 in a manner allowing easy maintenance and wiring. This arrangement ensures that the steering mechanism is capable of transmitting power in manner staggered from rotation of the rotating frame 40, avoiding interference therebetween.

Axis adjusting bolts 81 for adjusting the center axis of the base 70 are provided on the base plate 80 outside of the base 70. In this way, concentricity of bases 70 that are arranged vertically one above another can be ensured during assembly, and the center axis of the rotating shaft 30 at its upper and lower ends can be adjusted to avoid a significant deflection thereof, which may cause damage to components.

The rotating shaft 30 includes an upper coupling shaft 31 attached to the rotating frame 40 and the intermediate coupling shaft 32 passing through the rotating seat 10, the base 70 and the base plate 80. The upper coupling shaft 31 is connected to the intermediate coupling shaft 32 by a flange. The intermediate coupling shaft 32 defines a step in its outer wall, making the shape broader at the top and narrow at the bottom. A surface of the step is spaced from the top end face of the upper radial bearing 11 by a distance. The rotating shaft 30 further includes a lower coupling shaft 33. Both the lower coupling shaft 33 and the intermediate coupling shaft 32 are hollow tubular shafts, which are nested together in such a manner that they cannot move relative to each other both axially and circumferentially. The lower coupling shaft 33 is provided a lower end thereof with a flange to be connected to a power receiving mechanism. Since the windmill is large, constructing the rotating shaft 30 from multiple sections can facilitate transportation, assembly and machining. Providing such an intermediate coupling shaft 32 and coupling the upper and lower radial bearings 11, 71 to it can ensure machining accuracy of the intermediate coupling shaft 32 and facilitate installation. Otherwise, it would be necessary to handle a very long rotating shaft 30. Due to its great length, it would be very difficult to achieve desired machining accuracy, and assembling the upper and lower radial bearings 11, 71 with it would also be challenging. In contrast, providing the intermediate coupling shaft 32 with a length of approximately one meter can greatly facilitate the machining and make the installation easy to achieve. The step in the intermediate coupling shaft 32 is provided to allow the radial bearings to temporarily bear the weight of the intermediate coupling shaft 32 in an early stage of assembly when the assembly of the rotation support structure 34 has not been completed yet. The weight of the single intermediate coupling shaft would not cause damage to the bearing. Further, as the rotating shaft 30 is overall a tubular structure, it is ensured that the rotating shaft 30 has a circumferential wall that is sufficient to allow the rotating frame 40 to be mounted thereon while being allowed to have an as much as possible reduced weight. As a power output end, the lower end of the lower coupling shaft 33 can be connected to a generator to allow it to generate electricity from wind energy.

A main body of the windmill is arranged on multiple-layer platform 91 on the rack 90 along axial direction of the rotating shaft 30. The base plate 80 is arranged on a top surface of the platform 91. The upper coupling shaft 31 is provided at an upper end thereof with a flange configured to be coupled to an intermediate coupling shaft 32 of a windmill above. With this multi-layer arrangement of windmills, an increased wind exposure area can be arranged within the same area, enabling more electricity to be produced. Moreover, the rotating shafts 30 can be vertically interconnected with flanges to form a single shaft to which the windmills vertical arranged one above another are attached to allow their power to be combined. This provides ease of disassembly, and the number of windmills is determined simply by the weight bearing capacity.

The rotating frame 40 includes cantilevers 41 anchored at upper and lower ends of the wind blades. Inner ends of the cantilevers 41 are like half-structures. At outer ends of the upper and lower cantilevers 41, bearing seats and radial bearings are provided to support the articulation shafts 51. The articulation shafts 51 at the outer ends of the cantilevers 41 are provided with axially supporting structures for counteracting the gravity of the wind blades 50. When the number of wind blades is two, they are half-structures. An axial angle occupied by the inner end structure of each cantilever 41 is equal to 360° divided by the number of wind blades. This allows cantilevers 41 of a single design to be manufactured and transported. Moreover, the resemblance to half-structures enables easy assembly and disassembly. The axially supporting structures are axially supporting bearing or maglev structures.

Diagonal braces 42 are disposed between the lower cantilevers 41 and the rotating shaft 30. The cantilevers 41, the rotating shaft 30 and the diagonal braces 42 form vertical triangles. Lower portions of the wind blades 50 are trapezoidal in shape in order to leave space for the placement of the diagonal braces 42. Since the windmill is large and the lower cantilevers 41 are heavily loaded, adding the diagonal braces 42 can increase their load-bearing capacity. When the diagonal braces 42 cannot be arranged under the lower cantilevers 41 due to limited space there, they may be arranged above the lower cantilevers 41. In this case, the lower portions of the wind blades 50 may be correspondingly designed to leave space for the placement of the diagonal braces 42.

A rotating shaft brake for limiting revolution α of the windmill is arranged between the rotating shaft 30 and the rack 90. The rotating shaft brake serves to stop operation of the windmill by means of the braking means 36 when there is a need for maintenance. Moreover, safety hazards that may arise from rotation of the windmill during assembly or disassembly can be avoided.

Wind blade brakes for limiting spinning β of the wind blades 50 are arranged between the articulation shafts 51 and the rotating frame 40. During assembly or disassembly, when the linkage between the wind blades 50 and the rotating shaft 30 has not been established, the wind blades can freely spin β and may interfere with assembly or disassembly operations. This can be avoided by the wind blade brakes. Moreover, safety hazards that may arise from spinning of the wind blades 50 during assembly and disassembly may be avoided.

## Claims

1. A windmill, **characterized in** comprising a rotating seat (10), an rotating shaft (30) vertically disposed on the rotating seat (10) as a power output shaft, a rotating frame (40) fixed circumferentially around the rotating shaft (30), and wind blades (50) articulated to the rotating frame (40), a direction of center axes of articulation shafts (51) of the wind blades (50) being parallel to a direction of a center axis of the rotating shaft (30), at least two wind blades (50) evenly spaced in a circumferential direction of the rotating shaft (30), the wind blades (50) spinning (β) about the center axes of the articulation shafts (51) when they are revolving (α) about the center axis of the rotating shaft (30), the revolution (α) and spinning (β) of the wind blades (50) occurring in the same direction or in opposite directions, the rotating seat (10) driven by a steering mechanism to make a rotation with attitude adjustments following a wind direction according to the wind direction, the rotation with attitude adjustments satisfying such an adaptation relationship that, when a plane where the center axes of the articulation shafts (51) and the center axis of the rotating shaft (30) lie is perpendicular to the wind direction, a blade surface of one of the wind blades (50) on one side is perpendicular to the wind direction, and when the one of the wind blades (50) revolves 180° with the rotating shaft (30), it spins 90° so that its blade surface is parallel to the wind direction, rotation support structures (34) for axially supporting the rotating shaft (30) and the wind blades (50) coupled thereto disposed between the rotating shaft (30) and a rack (90).

2. The windmill according to claim 1, **characterized in that** a ratio of a speed at which the wind blades (50) revolve (α) to a speed at which the wind blades (50) spin (β) relative to a ground is 2:1.

3. The windmill according to claim 1, **characterized in that** a direction in which the wind blades (50) revolve (α) is the same as a direction in which the wind blades (50) spin (β) relative to a ground.

4. The windmill according to claim 1, **characterized in that**, when the plane where the center axes of the articulation shafts (51) and the center axis of the rotating shaft (30) lie is parallel to the wind direction, the blade surface of the one of the wind blades (50) forms an angle of 45° with the wind direction.

5. The windmill according to claim 1, **characterized in that** a braking means for limiting rotation of the rotating seat (10) is disposed in a power transmission path between the wind blades (50) and the steering mechanism.

6. The windmill according to claim 1, **characterized in** further comprising a base (70) in a shape of a cylindrical boss disposed on a base plate (80), wherein: the rotating shaft (30) passes through the rotating seat (10), the base (70) and the base plate (80) and forms clearance fits with the three; the base (70) is provided therein with a lower radial bearing (71) with a direction of center axis being a vertical direction and for radially supporting the rotating shaft (30); the base (70) is provided at an upper end thereof in concentricity therewith with an axial bearing (12) with a direction of center axis being a vertical direction and for supporting the rotating seat (10); the rotating seat (10) is provided therein with an upper radial bearing (11) with a direction of center axis being a vertical direction and for radially supporting the rotating seat (10); a shaft body of the rotating shaft (30) is disposed in the upper and lower radial bearings (11, 71) and forms small clearance fits with inner rings of these bearings; and the upper radial bearing (11) is arranged on a top end face of the axial bearing (12).

7. The windmill according to claim 1, 2, 3, 4, 5 or 6, **characterized in that** the rotating seat (10) is fixedly provided thereon with a bevel base gear (13) in concentricity with the rotating shaft (30), the articulation shafts (51) of the wind blades (50) are fixedly provided thereon with follower bevel gears (52) in concentricity therewith; power transmission shafts (60) with a direction of center axes lying in a horizontal plane are provided on opposite ends thereof with bevel gears (61), the two bevel gears (61) mesh with the bevel base gear (13) and the follower bevel gears (52), respectively; a transmission ratio of the bevel base gear (13) to the follower bevel gears (52) is 2:1; bases of the bevel base gear (13) and the follower bevel gears (52) are oriented toward a same direction; and meshing sides of the two bevel gears (61) meshing with the bevel base gear (13) and the follower bevel gears (52) are located on a side of corresponding gears away from the rotating shaft (30).

8. The windmill according to claim 1, 2, 3, 4, 5 or 6, **characterized in that** the steering mechanism comprises a steering sprocket or gear (14) fixedly disposed on the rotating seat (10) in concentricity therewith, a driving means receives a position signal of a wind direction vane (20) and drives and adapts the sprocket or gear (14) to rotate following the wind direction vane (20).

9. The windmill according to claim 6, **characterized in that** the base plate (80) outside of the base (70) is provided with axis adjusting bolts (81) for adjusting a position of a center axis of the base (70).

10. The windmill according to claim 6, **characterized in that** the rotating shaft (30) includes an upper coupling shaft (31) coupled to the rotating frame (40) and an intermediate coupling shaft (32) passing through the rotating seat (10), the base (70) and the base plate (80), the upper coupling shaft (31) coupled to the intermediate coupling shaft (32) by a flange, an outer wall of the intermediate coupling shaft (32) being in a shape of a stepped shaft broader at the top and narrow at the bottom, which has a step surface spaced apart from a top end face of the upper radial bearing (11) by a distance, a lower coupling shaft (33) and the intermediate coupling shaft (32) are both hollow tubular shafts, which are nested together in a manner with limited axial and circumferential movability, the lower coupling shaft (33) provided at a lower end thereof with a flange to be coupled to a power receiving mechanism.

11. The windmill according to claim 10, **characterized in that** a main body of the windmill is arranged on multiple-layer platform (91) on the rack (90) along axial direction of the rotating shaft (30), the base plate (80) is arranged on a top surface of the platform (91), the upper coupling shaft (31) is provided at an upper end thereof with a flange coupled to an intermediate coupling shaft (32) of a main body of an windmill above.

12. The windmill according to claim 1, **characterized in that** the rotating frame (40) comprises cantilevers (41) disposed at respective upper and lower ends of the wind blades, inner ends of the cantilevers (41) being like half-structures, the upper and lower cantilevers (41) provided at outer ends thereof with bearing seats and radial bearings for supporting the articulation shafts (51), the articulation shafts (51) at the outer ends of the cantilevers (41) provided with axially supporting structures for counteracting a gravity of the wind blades (50).

13. The windmill according to claim 12, **characterized in that** diagonal braces (42) are disposed between the lower cantilevers (41) and the rotating shaft (30) so that the cantilevers (41), the rotating shaft (30) and the diagonal brace (42) together form triangular structures lying in vertical planes, wherein lower portions of the wind blades (50) are trapezoidal in shape to leave space for placement of the diagonal braces (42).

14. The windmill according to claim 1, **characterized in that** a rotating shaft brake for limiting the revolution (α) of the windmill are disposed between the rotating shaft (30) and the rack (90).

15. The windmill according to claim 1, **characterized in that** wind blade brakes for limiting the spinning (β) of the wind blades (50) are disposed between the articulation shafts (51) and the rotating frame (40).
